# EUROPÄISCHE PATENTSCHRIFT

(11) **EP 2 631 099 B1**
(45) Veröffentlichungstag und Bekanntmachung des Hinweises auf die Patenterteilung: **16.07.2014**
(21) Anmeldenummer: 12156661.6
(22) Anmeldetag: 23.02.2012
(51) Int. Cl.: B60H 1/32, B60H 1/28

(54) **Kraftfahrzeug mit einem Wasserkasten und einer Klimaanlage**
Motor vehicle with a water chamber and air conditioning system
Véhicule automobile doté d'un réservoir d'eau et d'une climatisation

(43) Veröffentlichungstag der Anmeldung: 28.08.2013
(73) Patentinhaber: Weidmann Plastics Technology AG, 8640 Rapperswil (CH)
(72) Erfinder: Harke, Stefan, 8832 Wollerau (CH)
(74) Vertreter: Rutz, Andrea

(56) Entgegenhaltungen:
- DE-A1- 10 221 191
- DE-U1- 9 405 933
- JP-A- 4 159 125

## Beschreibung

Die Erfindung betrifft ein Kraftfahrzeug.

Die DE19932691A1 offenbart ein Fahrzeug mit einem Innenraum und einer konventionellen Klimaanlage. Die Klimaanlage kann im Fahrbetrieb anfallendes Kondenswasser auffangen. Vor dem Eintreten von Zuluft in den Fahrgastraum des Fahrzeuges wird die Zuluft mittels einer Befeuchtungseinheit mit dem Kondenswasser befeuchtet. Die Befeuchtungseinheit ist beispielsweise eine Befeuchtungsturbine. Hierbei wird das Kondenswasser auf ein schnell rotierendes Laufrades der Turbine gespritzt. Dabei wird das Kondenswasser zentrifugal nach aussen geschleudert und in der Zuluft zu feinen Aerosolen zerstäubt und verdampft, wodurch die Temperatur der Zuluft vor deren Eintritt in den Fahrgastraum verringert wird. Nachteilig hierbei ist, dass die Luftfeuchtigkeit der Zuluft, welche dem Fahrgastraum zugeführt wird, ansteigt. Alternativ hierzu kann gemäss DE19932691A1 auch die Abluft aus dem Fahrgastraum gekühlt werden, indem das Kondenswasser auf ein schnell rotierendes Laufrad der Turbine gespritzt wird, wobei mit dieser gekühlten Abluft, über einen Wärmetauscher, die Zuluft in den Fahrgastraum gekühlt wird. Nachteilig ist hierbei, dass der beschriebene Aufbau komplex ist.

Die DE 102 21 191 A1 offenbart ein Kraftfahrzeug gemäß Oberbegriff des Anspruchs 1.

Der Erfindung liegt somit die Aufgabe zu Grunde, bei einem Kraftfahrzeug den Energieverbrauch zu mindern.

Die Aufgabe ist gemäss Anspruch 1 gelöst. Beim erfindungsgemässen Kraftfahrzeug soll die der Klimaanlage zuführbare Luft so vorgekühlt werden, dass einerseits keine Erhöhung der Luftfeuchtigkeit erfolgt und andererseits ein einfacherer Aufbau gewährleistet ist.

Das erfindungsgemässe Kraftfahrzeug umfasst einen Fahrgastraum, einen Wasserkasten, der eine Wandung aufweist, wobei die Wandung eine Aussenseite und eine Innenseite des Wasserkastens bildet, eine Klimaanlage mit einem Verdampfer zum Abscheiden von Wasser aus der der Klimaanlage zugeführten Luft, Mittel zum Auffangen und Aufbringen des am Verdampfer abgeschiedenen Wassers auf wenigstens einen Teilbereich der durch die Wandung des Wasserkastens gebildete Aussenseite des Wasserkastens sowie Luftzuführmittel zum Ansaugen von Luft in das Klimaanlage. Der Wasserkasten weist wenigstens eine Lufteinlassöffnung, wenigstens eine Luftauslassöffnung sowie wenigstens eine Wasserauslassöffnung auf. Die durch die Wandung des Wasserkastens gebildete Innenseite des Wasserkastens bildet einen Wasserabscheideraum, wobei die Wasserauslassöffnung geeignet ist zum Abführen von Wasser aus dem Wasserabscheideraum. Der Wasserabscheideraum ist mit der Lufteinlassöffnung, der Luftauslassöffnung sowie der Wasserauslassöffnung verbunden. Über die Lufteinlassöffnung kann Schwallwasser, wie beispielsweise Regenwasser oder Wasser einer Waschanlage, in den Wasserkasten eintreten, welches über den Wasserabscheideraum sowie die Wasserauslassöffnung den Wasserkasten wieder verlassen kann. Über die Lufteinlassöffnung kann zudem Luft, wie beispielsweise Umgebungsluft, in den Wasserkasten eintreten, welche den Wasserkasten wenigstens teilweise, bevorzugt vollständig, über den Wasserabscheideraum sowie die Luftauslassöffnung wieder verlässt. Die Luftauslassöffnung ist mit der Klimaanlage verbunden, so dass die über die Luftauslassöffnung den Wasserkasten verlassende Luft wenigstens teilweise, bevorzugt vollständig, in die Klimaanlage strömen kann. Die Klimaanlage weist den genannten Verdampfer auf, welcher die der Klimaanlage zugeführte Luft abkühlen kann und dadurch in der Luft vorhandenes Wasser wenigstens teilweise aus der Luft abgeschieden werden kann. Das Klimaanlage kann, muss aber nicht zwingend, zusätzlich zum Verdampfer, in an sich bekannter Weise beispielsweise noch eine Heizung sowie einen Luftfilter aufweisen. Zudem können die Luftzuführmittel, wie zum Beispiel ein Sauggebläse, in der Klimaanlage integriert sein. Die Luftzuführmittel sind geeignet, über die Lufteinlassöffnung, den Wasserabscheideraum sowie die Luftauslassöffnung Luft in die Klimaanlage anzusaugen. Die Klimaanlage ist mit dem Fahrgastraum verbunden, so dass die durch die Klimaanlage hindurchströmende Luft wenigstens teilweise, bevorzugt vollständig, in den Fahrgastraum gelangt, beziehungsweise klimatisierte Luft in den Fahrgastraum gelangt. Das erfindungsgemässe Kraftfahrzeug weist Mittel zum Auffangen und Auftragen des am Verdampfer abgeschiedenen Wassers beziehungsweise Kondenswassers auf, um dieses auf wenigstens einen Teilbereich der Aussenseite, bevorzugt auf die gesamte Aussenseite, des Wasserkastens aufzutragen. Die Temperatur des am Verdampfer abgeschiedenen Wassers, und somit auch die Temperatur des auf die Aussenseite des Wasserkastens aufgetragenen Wassers, liegt normalerweise im Bereich von etwa 2°C bis etwa 30°C. Das auf die durch die Wandung gebildete Aussenseite des Wasserkastens aufgetragene Wasser kann sich wieder durch Verdunstung oder Verdampfung verflüchtigen, da beim Betrieb des Kraftfahrzeuges die Temperatur der Aussenseite des Wasserkastens entsprechend hoch ist. Beim Betrieb des Kraftfahrzeuges entspricht die Temperatur der Aussenseite des Wasserkastens etwa der mittleren Motorraumtemperatur. Die Temperatur der Aussenseite des Wasserkastens, und somit in etwa auch die Temperatur der die Aussenseite des Wasserkastens bildenden Wandung, liegt normalerweise im Bereich von etwa 40°C bis etwa 120°C. Da Wärme von der Wandung des Wasserkastens auf das auf die Aussenseite des Wasserkastens aufgetragene Wasser übergehen kann, kann sich das Wasser verflüchtigen und die Temperatur der Wandung des Wasserkastens kann hierdurch gesenkt werden. Aufgrund der gesenkten Temperatur der Wandung des Wasserkastens kann Wärme von der den Wasserkasten hindurchströmenden Luft auf die Wandung des Wasserkastens übergehen, so dass dadurch die Temperatur der durch den Wasserkasten hindurchströmenden Luft gesenkt werden kann. Es tritt, allgemein formuliert, eine Abkühlung der durch den Wasserkasten hindurchströmenden Luft ein, falls die Temperatur der hindurchströmenden Luft höher als die Temperatur der Innenseite des Wasserkastens ist. Die Abkühlung der durch den Wasserkasten hindurchströmenden Luft findet insbesondere dann statt, wenn die Temperatur der hindurchströmenden Luft oberhalb von etwa 20°C liegt. Grundsätzlich gilt: Je höher die Temperatur der durch den Wasserkasten hindurchströmenden Luft gegenüber der Temperatur der Innenseite des Wasserkastens ist, desto höher ist die Abkühlung der hindurchströmenden Luft. Das erfindungsgemässe Kraftfahrzeug weist somit den Vorteil auf, dass die in die Klimaanlage eintretende Luft bereits vorgekühlt ist. Somit kann die Kühlleistung der Klimaanlage beziehungsweise die Energie zum Betrieb der Klimaanlage gesenkt werden. Die Senkung des Energieverbrauchs der Klimaanlage ist insbesondere bei Elektrofahrzeugen erwünscht, da hierdurch die Fahrreichweite des Elektrofahrzeuges erhöht werden kann. Auf der Aussenseite der Wasserkasten des Standes der Technik ist jeweils temperaturisolierendes Material angeordnet, insbesondere bei Wasserkasten welche im Motorraum angeordnet sind, um die Temperaturbelastung der die Aussenseite des Wasserkastens bildenden Wandung möglichst gering zu halten. Das Auftragen des temperaturisolierenden Materials auf die die Aussenseite des Wasserkastens bildenden Wandung ist aufwendig. Das erfindungsgemässe Kraftfahrzeug weist somit den Vorteil auf, dass auf die Anordnung von temperaturisolierendem Material auf die Aussenseite des Wasserkastens verzichtet werden kann. Ein weiterer Vorteil des erfindungsgemässen Kraftfahrzeuges ist, dass die Luftfeuchtigkeit der der Klimaanlage zugeführten Luft nicht erhöht wird. Zudem weist das erfindungsgemässe Kraftfahrzeug einen einfacheren Aufbau auf.

Nach einer Weiterbildung der Erfindung umfassen die Mittel wenigstens eine Zuführleitung. Die Zuführleitung führt das am Verdampfer abgeschiedene Wasser zur Aussenseite des Wasserkastens hin. Die Zuführleitung kann zudem die Funktion innehaben, das am Verdampfer abgeschiedene Wasser aufzufangen und/oder das am Verdampfer abgeschiedene Wasser auf die Aussenseite des Wasserkastens aufzutragen.

Nach einer Weiterbildung der Erfindung weist die Zuführleitung wenigstens eine Einlassöffnung und wenigstens eine Auslassöffnung auf, wobei die Einlassöffnung und die Auslassöffnung über einen Hohlraum miteinander verbunden sind, wobei wenigstens im Hohlraum Fasern angeordnet sind, welche geeignet sind über den Kapillareffekt das am Verdampfer abgeschiedene Wasser wenigstens von der Einlassöffnung zur Auslassöffnung hinzutransportieren sowie das genannte Wasser wieder abzugeben. Bevorzugt sind die Fasern als Vlies ausgebildet. Die Fasern können aus der Einlassöffnung und/oder Auslassöffnung herausragen. Bevorzugt liegen die aus der Auslassöffnung herausragenden Fasern auf wenigstens einem Teilbereich der Aussenseite des Wasserkastens. Die aus der Einlassöffnung herausragenden Fasern ragen bevorzugt in ein Reservoir zum Sammeln des am Verdampfer abgeschiedenen Wassers. Dem Fachmann sind Fasern bekannt mit den in diesem Abschnitt geforderten Eigenschaften.

Nach einer Weiterbildung der Erfindung umfassen die Mittel wenigstens eine Sprühdüse. Die Sprühdüse hat die Funktion, das am Verdampfer abgeschiedene Wasser, beispielsweise in Tropfenform, auf wenigstens einen Teilbereich der Aussenseite des Wasserkastens aufzutragen.

Nach einer Weiterbildung der Erfindung umfassen die Mittel wenigstens eine Fluidpumpe. Die Fluidpumpe hat die Funktion, das am Verdampfer abgeschiedene Wasser, vorzugweise über die Zuführleitung, zur Aussenseite des Wasserkastens hinzutransportieren.

Nach einer Weiterbildung der Erfindung umfassen die Mittel wenigstens ein Reservoir zum Sammeln des am Verdampfer abgeschiedenen Wassers.

Nach einer Weiterbildung der Erfindung umfassen die Luftzuführmittel wenigstens ein Sauggebläse. Die Luftzuführmittel bewirken, dass Luft über die Lufteinlassöffnung in die Klimaanlage gesaugt werden kann.

Nach einer Weiterbildung der Erfindung weist die Klimaanlage die Luftzuführmittel auf.

Nach einer Weiterbildung der Erfindung weist die Wandung, welche die Aussenseite des Wasserkastens bildet, Fasern auf, so dass wenigstens ein Teilbereich der Aussenseite des Wasserkastens durch Fasern gebildet ist, welche geeignet sind, gemäss dem Kapillareffekt, das am Verdampfer abgeschiedene Wasser aufzunehmen, das aufgenommene Wasser zu speichern sowie das gespeicherte Wasser wieder abzugeben. Bei diesem Wasserkasten sind somit die Fasern ein Bestandteil der Wandung. Die Wandung des Wasserkastens weist somit einen die Fasern enthaltenden äusseren Wandungsteil, wobei die Fasern wenigstens einen Teilbereich der Aussenseite des Wasserkastens bilden, und einen inneren Wandungsteil auf. Der innere Wandungsteil bildet die Innenseite des Wasserkastens und ist über eine äussere Oberfläche lösbar und/oder unlösbar an einer inneren Oberfläche des äusseren Wandungsteils befestigt. Dem Fachmann ist eine Vielzahl von Verfahren bekannt, einen solchen Wasserkasten herzustellen. Ein solcher Wasserkasten kann beispielsweise hergestellt werden, indem die Fasern, bevorzugt in der Form eines Vlieses, in ein Spritzgusswerkzeug eingelegt werden und nach dem Einlegen das Vlies beispielsweise mit Kunststoff hinterspritzt wird. Eine andere Möglichkeit, einen solchen Wasserkasten herzustellen, ist, in einem ersten Schritt den inneren Wandungsteil des Wasserkastens, beispielsweise mittels Spritzguss, zum Beispiel aus Kunststoff, herzustellen. In einem zweiten Schritt wird auf die genannte äussere Oberfläche des inneren Wandungsteil der äussere, Fasern enthaltende Wandungsteil, vorzugweise in der Form eines aus den Fasern hergestellten Vlieses, beispielsweise aufgeklebt. Bevorzugt weisen die Fasern temperaturisolierende Eigenschaften auf. Bevorzugt bilden die Fasern ein Vlies, bevorzugt einen Filz. Das auf den durch die Fasern gebildete wenigstens eine Teilbereich der Aussenseite des Wasserkastens aufgetragene Wasser wird durch die Fasern aufgesogen, wobei hierdurch das Wasser auf die äussere Oberfläche des inneren Wandungsteils gelangt. Zudem wird durch die Fasern das Wasser im äusseren Wandungsteil gespeichert. Das auf der äusseren Oberfläche des inneren Wandungsteils angeordnete Wasser kann sich durch Verdunstung oder Verdampfung wieder verflüchtigen. Durch die Verflüchtigung des gespeicherten Wassers wird die Temperatur des inneren Wandungsteils gesenkt. Der innere Wandungsteil mit gesenkter Temperatur bewirkt dann, dass die Temperatur der durch den Wasserkasten hindurchströmenden Luft gesenkt wird. Durch die Speicherfunktion der Fasern ist eine kontinuierliche Kühlung des inneren Wandungsteils des Wasserkastens möglich, ohne dass kontinuierlich das am Verdampfer abgeschiedene Wasser auf die Aussenseite des Wasserkastens aufgetragen werden muss. Denkbar ist auch, dass die die Aussenseite des Wasserkastens bildende Wandung im Wesentlichen oder vollständig aus den Fasern besteht. Fasern, welche die in diesem Absatz genannten Eigenschaften aufweisen, sind dem Fachmann bekannt. Entscheidend für die Fasern ist, dass diese eine gute Saugfähigkeit für Wasser aufweisen.

Nach einer Weiterbildung der Erfindung ist im Wasserabscheideraum wenigstens eine Vorrichtung zum Abscheiden von Wasser aus der den Wasserkasten hindurchströmenden Luft angeordnet. Bevorzugt ist die Vorrichtung mit der Wandung verbunden, welche die Aussenseite des Wasserkastens bildet. Die Vorrichtung umfasst beispielsweise wenigstens ein in den Wasserabscheideraum ragendes Leitelement zum Umlenken von der den Wasserkasten hindurchströmenden Luft. Bevorzugt ist die Vorrichtung so ausgestaltet, dass die durch den Wasserkasten hindurchströmende Luft Wärme an die Vorrichtung abgeben kann, wobei die Vorrichtung diese Wärme auf die die Aussenseite des Wasserkastens bildende Wandung abgeben kann. Diese Wärme wird wiederum durch Verflüchtigung des auf der Aussenseite des Wasserkastens angeordneten Wassers abgeführt.

Nach einer Weiterbildung der Erfindung ist der Wasserabscheideraum unmittelbar mit der Lufteinlassöffnung, der Luftauslassöffnung sowie der Wasserauslassöffnung verbunden. Bei einem solchen Wasserkasten bildet die Innenseite der Wandung, welche die Aussenseite des Wasserkastens bildet, ausschliesslich den Wasserabscheideraum. Die Wandung eines solchen Wasserkastens weist bevorzugt eine Bodenwandung und eine Seitenwandung auf. Bevorzugter weist die Wandung, zusätzlich zur Bodenwandung und zur Seitenwandung, eine Deckenwandung auf. Bevorzugt weist die Bodenwandung die Wasserauslassöffnung auf.

Nach einer Weiterbildung der Erfindung bildet die Wandung wenigstens eine Luftauslassleitung welche die Luftauslassöffnung mit dem Wasserabscheideraum verbindet.

Nach einer Weiterbildung der Erfindung bildet die Wandung wenigstens eine Luftzuführleitung, welche die Lufteinlassöffnung mit dem Wasserabscheideraum verbindet.

Nach einer Weiterbildung der Erfindung weist die Wandung einen ersten Wandungsabschnitt sowie einen zweiten Wandungsabschnitt und/oder einen dritten Wandungsabschnitt auf, wobei der erste Wandungsabschnitt einen Teilbereich der Innenseite des Wasserkastens bildet, wobei der erste Teilbereich den Wasserabscheideraum bildet, wobei der zweite Wandungsabschnitt wenigstens eine Luftzuführleitung bildet, welche die Lufteinlassöffnung mit dem Wasserabscheideraum verbindet und wobei der dritte Wandungsabschnitt wenigstens eine Luftauslassleitung bildet, welche die Luftauslassöffnung mit dem Wasserabscheideraum verbindet. Bevorzugt weist der erste Wandungsabschnitt die Wasserauslassöffnung auf. Der zweite Wandungsabschnitt und/oder dritte Wandungsabschnitt ist lösbar oder unlösbar mit dem ersten Wandungsabschnitt verbunden. Bevorzugt weist der erste Wandungsabschnitt eine Bodenwandung und eine Seitenwandung auf. Bevorzugter weist der erste Wandungsabschnitt, zusätzlich zur Bodenwandung und zur Seitenwandung, eine Deckenwandung auf. Bevorzugt weist die Bodenwandung die Wasserauslassöffnung auf.

Nach einer Weiterbildung der Erfindung weist der Wasserabscheideraum einen ersten Bereich und einen zweiten Bereich auf, welche miteinander verbunden sind, wobei der erste Bereich sowie der zweiten Bereich jeweils mit der wenigstens einen Wasserauslassöffnung verbunden sind und wobei im zweiten Bereich wenigstens eine Vorrichtung zum Abscheiden von Wasser aus der den Wasserkasten hindurchströmenden Luft angeordnet ist. Bevorzugt ist der zweite Bereich mit der Luftauslassöffnung verbunden. Bevorzugt ist der erste Bereich mit der Lufteinlassöffnung verbunden.

Nach einer Weiterbildung der Erfindung weist das Kraftfahrzeug eine Windschutzscheibe mit einer Unterkante sowie eine Motorhaube auf, wobei die Unterkante und die Motorhaube einen Spalt bilden und wobei die Lufteinlassöffnung im Spalt oder unterhalb des Spaltes angeordnet ist.

Nach einer Weiterbildung der Erfindung weist das Kraftfahrzeug eine Motorhaube mit wenigstens einer Öffnung auf, wobei die Lufteinlassöffnung in der Öffnung oder unterhalb der Öffnung angeordnet ist.

Nach einer Weiterbildung der Erfindung ist die Luftauslassöffnung über wenigstens eine Luftzuführleitung mit der Klimaanlage verbunden.

Nach einer Weiterbildung der Erfindung ist die Lufteinlassöffnung und/oder die Luftauslassöffnung oberhalb der Wasserauslassöffnung angeordnet.

Nach einer Weiterbildung der Erfindung weist das Kraftfahrzeug einen Motorraum auf, wobei der Wasserkasten im Motorraum angeordnet ist.

Nach einer Weiterbildung der Erfindung ist die Klimaanlage im Fahrgastraum angeordnet.

Nach einer Weiterbildung der Erfindung weist das Kraftfahrzeug eine Stirnwand auf, welche das Kraftfahrzeug in einen Motorraum und den Fahrgastraum trennt.

Nach einer Weiterbildung der Erfindung ist die Wandung, welche die Aussenseite und die Innenseite des Wasserkastens bildet, aus Kunststoff hergestellt. Bevorzugt weist der Kunststoff Polypropylen und/oder Polyamid auf.

Vorzugsweise ist der Verdampfer im Fahrgastraum und der Wasserkasten im Motorraum angeordnet. Das zum Kühlen des Wasserkastens verwendete Wasser gelangt in diesem Fall vom Fahrgastraum in den Motorraum und die im Wasserkasten angesaugte und gekühlte Frischluft vom Wasserkasten in den Fahrgastraum bzw. in die in diesem angeordnete Klimaanlage.

Zum Kühlen des Wasserkastens kann gemäss einer Weiterbildung der Erfindung Wasser verwendet werden, das im Innenraum des Wasserkastens als Schwallwasser oder Kondenswasser anfällt. Dieses Wasser kann beispielsweise durch vergleichsweise kleine Öffnungen oder Poren einer Wandung des Wasserkastens auf die Aussenseite des Wasserkastens geleitet werden und kann sich dort verflüchtigen und entsprechend die Temperatur dieser Wandung senken. Zum Kühlen der Wandung kann auch Waser verwendet werden, das durch die Wasserauslassöffnung ausgeschieden wird.

Weitere vorteilhafte Merkmale der Erfindung ergeben sich aus der nachfolgenden Beschreibung sowie den Zeichnungen. Ausführungsbeispiele der Erfindung werden nachfolgend anhand von Zeichnungen erläutert. Es zeigen:
Fig.1 schematisch einen Schnitt durch einen Vorderteil eines erfindungsgemässen Kraftfahrzeuges,
Fig.2 schematisch die vergrösserte Darstellung eines Teilbereiches einer ersten Variante des Schnittes gemäss Fig.1,
Fig.3 schematisch eine zweite Variante des Schnittes durch den Vorderteil des erfindungsgemässen Kraftfahrzeuges gemäss Fig.1 und
Fig.4 schematisch eine dritte Variante des Schnittes durch den Vorderteil des erfindungsgemässen Kraftfahrzeuges gemäss Figur 1.

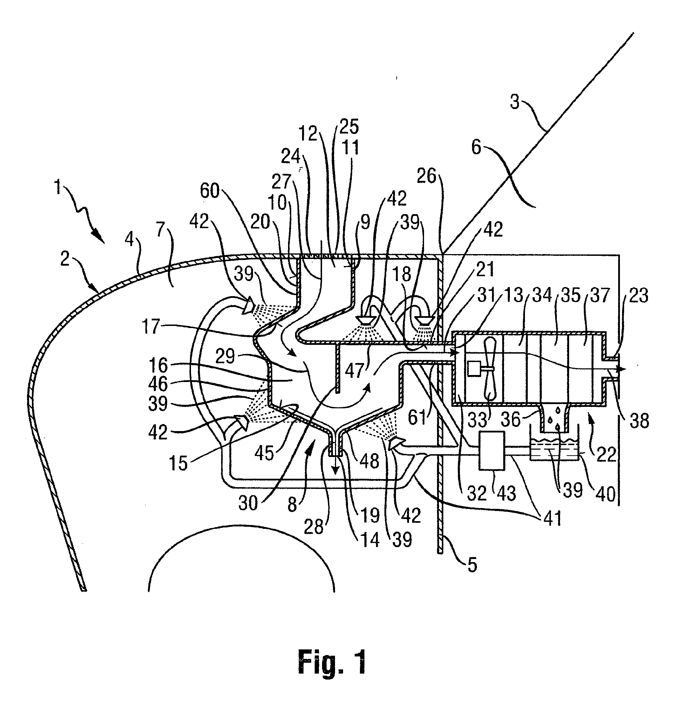

Das in Figur 1 gezeigte Kraftfahrzeug 1 weist in üblicher Weise eine Karosserie 2, eine Windschutzscheibe 3 und eine Motorhaube 4 auf. Eine Stirnwand 5 trennt den Innenraum des Kraftfahrzeuges 1 in einen Fahrgastraum 6 und einen Motorraum 7. Unterhalb der Motorhaube 4 ist im Motorraum 7 ein Wasserkasten 8, welcher beispielsweise aus Kunststoff hergestellt ist, angeordnet. Der Kunststoff weist zum Beispiel mit Talkum gefülltes Polypropylen und / oder Polyamid auf. Der Wasserkasten 8 kann aber auch ein Bestandteil der Karosserie 2 sein und beispielsweise aus Metall hergestellt sein. Der Wasserkasten 8 weist eine Wandung 9 auf, welche eine Aussenseite 10 und eine Innenseite 11 des Wasserkastens 8 bildet. Zudem weist der Wasserkasten 8 eine Lufteinlassöffnung 12, eine Luftauslassöffnung 13 sowie eine Wasserauslassöffnung 14 auf, wobei die Wasserauslassöffnung 14 an der tiefsten Stelle des Wasserkastens 8 angeordnet ist. Der Wasserkasten 8 kann auch mehrere Lufteinlassöffnungen, mehrere Luftauslassöffnungen oder mehrere Wasserauslassöffnungen aufweisen. Die Innenseite 11 weist einen Teilbereich 15 auf, welcher einen Wasserabscheideraum 16 bildet, der mit der Lufteinlassöffnung 12, der Luftauslassöffnung 13 sowie mit der Wasserauslassöffnung 14 verbunden ist. Die Lufteinlassöffnung 12 ist über eine durch die Wandung 9 gebildeten rohrförmigen Luftzuführleitung 20 mit dem Wasserabscheideraum 16 verbunden. Die Wandung 9 bildet zudem eine rohrförmige Luftauslassleitung 21, welche die Luftauslassöffnung 13 mit dem Wasserabscheideraum 16 verbindet. Der Wasserkasten 8 kann selbstverständlich auch mehrere Luftzuführleitungen und/oder mehrere Luftauslassleitungen aufweisen. Die Wasserauslassöffnung 14 ist unmittelbar mit dem Wasserabscheideraum 16 verbunden. Die Wandung 9 des Wasserkastens 8 weist somit einen ersten Wandungsabschnitt 48, einen zweiten Wandungsabschnitt 60 sowie eine dritten Wandungsabschnitt 61 auf. Der erste Wandungsabschnitt 48 bildet den Teilbereich 15 der Innenseite 11 des Wasserkastens 8, welcher wiederum den Wasserabscheideraum 16 bildet. Die Luftzuführleitung 20 ist durch den zweiten Wandungsabschnitt 60 gebildet, wobei der zweite Wandungsabschnitt 60 einen Teilbereich 17 der Innenseite 11 des Wasserkastens 8 bildet. Die Luftauslassleitung 21 ist durch den dritten Wandungsabschnitt 61 gebildet, wobei der dritte Wandungsabschnitt 61 einen Teilbereich 18 der Innenseite 11 des Wasserkastens 8 bildet. Die Teilbereiche 15, 17 und 18 bilden somit gemeinsam die Innenseite 11 des Wasserkastens 8. Der erste Wandungsabschnitt 48 weist wiederum, wie in Figur 1 ersichtlich, eine Bodenwandung 45, eine Seitenwandung 46 und eine Deckenwandung 47 auf. Der zweite Wandungsabschnitt 60 und der dritte Wandungsabschnitt 61 sind unlösbar mit dem ersten Wandungsabschnitt 48 verbunden. Eine unlösbare Verbindung ist beispielsweise gegeben, falls der die Luftauslassleitung 21 bildende dritte Wandungsabschnitt 61 und der die Luftzuführleitung 20 bildende zweite Wandungsabschnitt 60, wie in Figur 1 dargestellt, einstückig mit der Wandungsabschnitt 48 verbunden sind. Denkbar ist aber auch, dass der zweite Wandungsabschnitt 60 und/oder der dritte Wandungsabschnitt 61 lösbar mit dem ersten Wandungsabschnitt 48 verbunden sind. Eine lösbare Verbindung ist beispielsweise eine Steckverbindung, eine Bayonettverbindung oder sonst geeignete Verbindung. Die Luftauslassöffnung 13 mündet in eine Klimaanlage 22, welche mit dem Fahrgastraum 6 über eine Luftzuführleitung 23 verbunden ist. Die Klimaanlage 22 ist, wie in Figur 1 dargestellt, bevorzugt im Fahrgastraum 6 angeordnet, kann sich aber auch im Motorraum 7 befinden. Wie in Figur 1 ersichtlich, ist die durch die Luftzuführleitung 20 gebildete Lufteinlassöffnung 12 unterhalb einer Öffnung 24 der Motorhaube 4 angeordnet, welche durch ein Gitter 25 abgedeckt ist. Das Gitter 25 verhindert beispielsweise den Eintritt von Laub oder anderen flächigen Verunreinigungen in den Wasserkasten 8. Gemäss einer weiteren Variante ragt die Luftzuführleitung 20 in die Öffnung 24 der Motorhaube 4, so dass die Lufteinlassöffnung 12 in der Öffnung 24 angeordnet ist. In diesem Fall ist die Lufteinlassöffnung 12 mit einem Gitter abgedeckt (nicht dargestellt). Bei einer anderen Ausführungsform bilden eine Unterkante 26 der Windschutzscheibe 3 und die Motorhaube 4 einen Spalt, wobei die Lufteinlassöffnung 12 im Spalt oder unterhalb des Spaltes angeordnet ist (nicht dargestellt). Weitere Varianten sind selbstverständlich denkbar.

Wie in Figur 1 ersichtlich, ist die Wasserauslassöffnung 14 unmittelbar mit dem Wasserabscheideraum 16 verbunden. Es können auch mehrere mit dem Wasserabscheideraum 16 verbundene Wasserauslassöffnungen vorhanden sein, wie beispielsweise eine nicht dargestellte Notwasserauslassöffnung. Diese Notwasserauslassöffnung hat die Funktion, bei Überlastung der Wasserauslassöffnung 14, zusätzlich Wasser aus dem Wasserkasten 8 abzuführen. Die Wasserauslassöffnung 14 kann beispielsweise eine Öffnung sein, welche durch die Bodenwandung 45 gebildet ist (nicht dargestellt). Bevorzugt ist die Wasserauslassöffnung 14, wie in Figur 1 dargestellt, durch ein öffenbares und wieder verschliessbares Ventil 19 gebildet, um das Einströmen von unerwünschter Fremdluft in den Wasserkasten 8 zu verhindern. Das Ventil 19 kann gesteuert sein.

Über die mit dem Gitter 25 abgedeckten Öffnung 24 der Motorhaube 4 und der Lufteinlassöffnung 12 des Wasserkastens 8 kann nun gemäss Pfeil 27 Umgebungsluft bzw. Frischluft, welche gegebenenfalls mit Wasser beladen ist, in den Wasserkastens 8 gelangen. Die Luftströmung gemäss Pfeil 27 tritt primär auf, falls die Luftzuführmittel 33 der Klimaanlage 22 in Betrieb sind und somit im Wasserkasten 8 einen Unterdruck erzeugen und somit Luft über die Öffnung 24, die Lufteinlassöffnung 12, die Luftzuführleitung 20, den Wasserabscheideraum 16 sowie die Luftauslassleitung 21 in die Klimaanlage 22 ansaugen. Die Luftzuführmittel 33 sind beispielsweise, wie in Figur 1 dargestellt, als Sauggebläse ausgebildet. Dem Fachmann sind verschiedenste Luftzuführmittel bekannt. Die Luftzuführmittel 33 müssen nicht zwingend, wie in Figur 1 dargestellt, ein Bestandteil der Klimaanlage 22 sein und können auch ausserhalb der Klimaanlage 22 angeordnet sein. Ebenfalls kann gemäss Pfeil 27, beispielsweise von der Motorhaube 4 oder von der Windschutzscheibe 3 über die Motorhaube 4 abströmendes Schwallwasser, wie beispielsweise Regenwasser oder Wasser einer Waschanlage, in den Wasserkasten 8 gelangen. Das gemäss Pfeil 27 in den Wasserkasten 8 einströmende Schwallwasser gelangt in den Wasserabscheideraum 16 und kann gemäss Pfeil 28 über das Ventil 19 wieder aus dem Wasserkasten 8 ausgeschieden werden. Die gemäss Pfeil 27 in den Wasserabscheideraum 16 eintretende Luft wird gemäss Pfeil 29 mittels einer im Wasserabscheideraum 16 angeordneten Vorrichtung 30, welche beispielsweise, wie in Figur 1 dargestellt, als ein in den Wasserabscheideraum 16 ragendes Leitelement ausgestaltet ist, umgelenkt. Durch diese Umlenkung der Luft kann, falls die Luft mit Wasser beladen ist, Wasser aus der Luft am Leitelement, beispielsweise in Tropfenform, abgeschieden werden, welches dann wiederum über das Ventil 19 gemäss Pfeil 28 aus dem Wasserkasten 8 abgeschieden werden kann. Die Vorrichtung 30 kann auch so ausgestaltet sein, dass diese horizontal von der Luft umströmt wird. Dem Fachmann sind verschiedenste Vorrichtungen in einem Wasserkasten zum Abscheiden Wasser aus der den Wasserkasten hindurchströmenden Luft bekannt. Die umgelenkte Luft verlässt gemäss Pfeil 31 den Wasserabscheideraum 16 und strömt über die Luftauslassleitung 21 sowie der Luftauslassöffnung 13 in die Klimaanlage 22.

Das in Figur 1 dargestellte Klimaanlage 22 weist einen Vorfilter 32, die Luftzuführmittel 33, einen Luftfilter 34, einen Verdampfer 35, einen Wasserabscheider 36 sowie eine Heizvorrichtung 37 auf. Die Heizvorrichtung 37 der Klimaanlage 22 dient dazu, falls notwendig, die Temperatur der vom Verdampfer 35 herkommenden Luft zu erhöhen. Gemäss Pfeil 38 strömt die in die Klimaanlage 22 eingetretene Luft durch die Klimaanlage 22 hindurch und verlässt die Klimaanlage 22 über die Luftzuführleitung 23 und tritt als klimatisierte Luft in den Fahrgastraum 6 ein. Die in die Klimaanlage 22 eingetretene Luft strömt zuerst durch den Vorfilter 32 hindurch, am Luftzuführmittel 33 vorbei und tritt dann durch den Luftfilter 34 hindurch. Danach kann die Luft am Verdampfer 35 gekühlt werden und hierdurch Wasser 39 aus der Luft abgeschieden werden beziehungsweise Kondenswasser generiert werden. Die in Figur 1 dargestellte Klimaanlage 22 ist nur beispielhaft. Diverse Klimaanlagen für Kraftfahrzeuge, welche einen Verdampfer aufweisen, sind dem Fachmann bekannt. Entscheidend für die Klimaanlage des erfindungsgemässen Kraftfahrzeuges ist, dass die Klimaanlage geeignet ist, die durch die Klimaanlage hindurchströmende Luft zu kühlen und hierdurch Wasser aus der Luft abzuscheiden, beziehungsweise Kondenswasser zu generieren. Die Klimaanlage kann als Klimamodul ausgebildet sein, was jedoch nicht zwingend ist. Das aus der Luft abgeschiedene Wasser 39 wird beispielsweise, wie in Figur 1 dargestellt, über den Wasserabscheider 36 aus der Klimaanlage 22 ausgeschieden und über Mittel zum Auffangen und Aufbringen auf die Aussenseite 10 des Wasserkastens 8 aufgebracht. Die genannten Mittel umfassen gemäss Figur 1 ein Reservoir 40, eine Zuführleitung 41, mehrere Sprühdüsen 42 sowie eine Fluidpumpe 43. Das über den Wasserabscheider 36 aus der Klimaanlage 22 ausgeschiedene Wasser 39 wird im Reservoir 40 gesammelt und mittels der Fluidpumpe 43 über die Zuführleitung 41 zur Aussenseite 10 des Wasserkastens 8 hintransportiert und mittels der Sprühdüsen 42, wie in Figur 1 dargestellt, auf Teilbereiche der Aussenseite 10 des Wasserkastens 8 aufgebracht. Bevorzugt wird das Wasser 39 auf die gesamte Aussenseite 10 des Wasserkastens 8 aufgebracht. Das auf die Aussenseite 10 aufgetragene Wasser 39 verflüchtigt sich wieder durch Verdunstung oder Verdampfung, da beim Betrieb des Kraftfahrzeuges 1 die Temperatur der Aussenseite 10 des Wasserkastens 8 entsprechend hoch ist. Die Temperatur der Aussenseite 10 des Wasserkastens 8, und somit in etwa auch die Temperatur der Wandung 9 welche die Aussenseite 10 des Wasserkastens 8 bildet, liegt normalerweise im Bereich von etwa 40°C bis etwa 120°C. Da Wärme von der Wandung 9 des Wasserkastens 8 auf das auf die Aussenseite 10 des Wasserkastens 8 aufgetragenen Wasser 39 übergehen kann, kann sich das Wasser 39 verflüchtigen und die Temperatur der Wandung 9 des Wasserkastens 8 kann hierdurch gesenkt werden. Aufgrund der gesenkten Temperatur der Wandung 9 kann Wärme von der durch den Wasserkasten 8 hindurchströmenden Luft auf die Wandung 9 übergehen, so dass dadurch die Temperatur der durch den Wasserkasten 8 hindurchströmenden Luft gesenkt werden kann. Das erfindungsgemässe Kraftfahrzeug 1 weist somit den Vorteil auf, dass die in die Klimaanlage 22 eintretende Luft bereits vorgekühlt ist. Somit kann die Kühlleistung der Klimaanlage 22 beziehungsweise die Energie zum Betrieb der Klimaanlage 22 gesenkt werden. Die Mittel zum Auffangen und Aufbringen des am Verdampfer abgeschiedenen Wassers sind anhand von Figur 1 nur beispielhaft beschrieben.

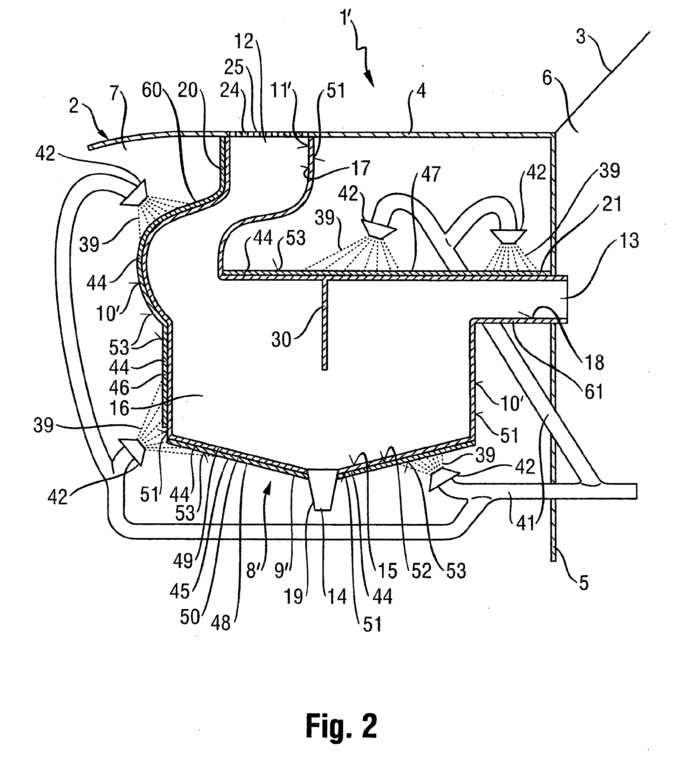

Die Figur 2 zeigt schematisch die vergrösserte Darstellung eines Teilbereiches einer zweiten Variante des Schnittes gemäss Figur 1. Der Aufbau und die Funktionsweise des gemäss Figur 2 nur teilweise dargestellten Kraftfahrzeuges 1' entspricht im Wesentlichen dem Aufbau und der Funktionsweise des anhand von Figur 1 beschriebenen Kraftfahrzeuges 1. Die Figur 2 zeigt den wesentlichen Unterschied zwischen dem Kraftfahrzeug 1' und dem Kraftfahrzeug 1 gemäss Figur 1. Die Figur 2 zeigt einen Wasserkasten 8' dessen Wandung 9' , welche die Aussenseite 10' des Wasserkastens 8' bildet, im Gegensatz zum Wasserkasten 8 gemäss Figur 1, zweiteilig ist, und einen inneren Wandungsteil 49 sowie einen äusseren Wandungsteil 50 aufweist. Der innere Wandungsteil 49 bildet die Innenseite 11' des Wasserkastens 8' und weist eine äussere Oberfläche 51 auf. Der äussere Wandungsteil 50 weist eine innere Oberfläche 52 sowie eine äussere Oberfläche 53 auf. Der innere Wandungsteil 49 und der äussere Wandungsteil 50 sind über die äussere Oberfläche 51 und die innere Oberfläche 52 miteinander verbunden. Wie in Figur 2 ersichtlich, ist der äussere Wandungsteil 50 auf Teilbereichen der äusseren Oberfläche 51 des inneren Wandungsteil 49 angeordnet, so dass die äussere Oberfläche 51 und die äussere Oberfläche 53 die Aussenseite 10' des Wasserkastens 8' bilden. Bevorzugt ist der äussere Wandungsteil 50 auf der gesamten äusseren Oberfläche 51 des inneren Wandungsteils 49 angeordnet. Der äusseren Wandungsteil 50 ist lösbar oder unlösbar am inneren Wandungsteil 49 befestigt. Der äussere Wandungsteil 50 enthält Fasern 44 und der innere Wandungsteil 49 ist beispielsweise aus Kunststoff hergestellt. Wie bereits im Zusammenhang mit Figur 1 beschrieben, wird über die Zuführleitung 41 das Wasser 39 zur Aussenseite 10' des Wasserkastens 8' hintransportiert und mittels der Sprühdüsen 42, wie mit gestrichelten Linien angedeutet, im Wesentlichen auf die äussere Oberfläche 53 des äusseren Wandungsteil 50 aufgetragen. Selbstverständlich kann das Wasser 39 zusätzlich auch auf die äussere Oberfläche 51 des inneren Wandungsteils 49 aufgetragen werden. Die Fasern 44 sind einerseits geeignet, gemäss dem Kapillareffekt, das mit gestrichelten Linien angedeutete Wasser 39 aufzusaugen, so dass dieses Wasser 39 auf die äussere Oberfläche 51 des inneren Wandungsteils 49 gelangt, und andererseits, das aufgesogene Wasser 39 zu speichern. Die Temperatur der äusseren Oberfläche 51 des inneren Wandungsteils 49 des Wasserkastens 8', und somit in etwa auch die Temperatur des Wandungsteils 49, liegt bei Betrieb des Kraftfahrzeuges 1' normalerweise im Bereich von etwa 40°C bis etwa 120°C. Aufgrund dieser Temperaturverhältnisse kann sich das auf der äusseren Oberfläche 51 des inneren Wandungsteils 49 angeordnete Wasser 39 durch Verdunstung oder Verdampfung wieder verflüchtigen. Das Wasser 39 kann sich verflüchtigen, da Wärme vom inneren Wandungsteil 49 des Wasserkastens 8' auf das auf der äusseren Oberfläche 51 des inneren Wandungsteils 49 angeordneten Wasser 39 übergehen kann. Durch diesen Wärmeübergang wird die Temperatur des inneren Wandungsteils 49 des Wasserkastens 8' gesenkt. Aufgrund der gesenkten Temperatur des inneren Wandungsteils 49 des Wasserkastens 8' kann Wärme von der den Wasserkasten 8' hindurchströmenden Luft über die Innenseite 11' auf den inneren Wandungsteil 49 des Wasserkastens 8' übergehen, so dass dadurch die Temperatur der durch den Wasserkasten 8' hindurchströmenden Luft gesenkt werden kann. Durch die Speicherfunktion der Fasern 44 ist eine kontinuierliche Kühlung des inneren Wandungsteils 49 des Wasserkastens 8' möglich, ohne dass kontinuierlich das am Verdampfer 35 abgeschiedene Wasser 39 auf die Aussenseite 10' des Wasserkastens 8' aufgetragen werden muss. Vorzugsweise haben die Fasern 44 zusätzlich noch temperaturisolierende Eigenschaften. Bevorzugt bilden die Fasern 44 ein Vlies, bevorzugter einen Filz. Entscheidend ist, dass die verwendeten Fasern eine gute Saugfähigkeit für Wasser aufweisen. Dem Fachmann sind Fasern mit den oben beschriebenen Eigenschaften bekannt. Dem Fachmann sind zudem verschiedene Verfahren zur Herstellung eines Wasserkastens, bei welchem die Fasern 44 ein Bestandteil der Wandung 9' und somit wenigstens einen Teilbereich der Aussenseite 10' des Wasserkastens 8' bilden, bekannt. Ein Wasserkasten 8', bei welchem die Fasern 44 ein Bestandteil der Wandung 9' bilden, kann beispielsweise hergestellt werden, indem die Fasern 44 in der Form eines Vlieses in ein Spritzgusswerkzeug eingelegt werden, und nach dem Einlegevorgang das Vlies mit Kunststoff hinterspritzt wird. Eine andere Möglichkeit, einen solchen Wasserkasten 8' herzustellen, ist, in einem ersten Schritt den inneren Wandungsteil 49 des Wasserkastens 8', beispielsweise mittels Spritzguss, zum Beispiel aus Kunststoff, herzustellen. In einem zweiten Schritt wird auf die äussere Oberfläche 51 des inneren Wandungsteils 49 der äusseren Wandungsteil 50, beziehungsweise die Fasern 44, vorzugweise in der Form eines Vlieses, beispielsweise aufgeklebt.

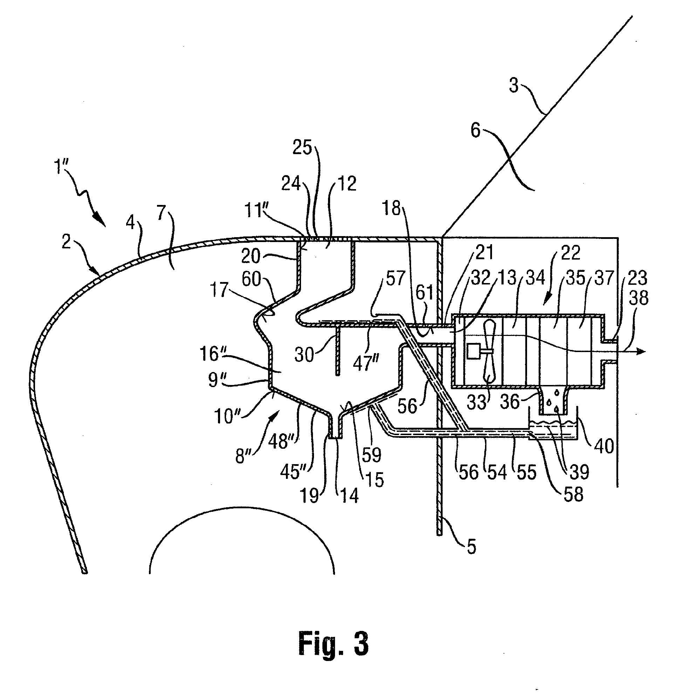

Die Figur 3 zeigt schematisch eine zweite Variante des Schnittes durch den Vorderteil des erfindungsgemässen Kraftfahrzeuges gemäss Figur 1. Der Aufbau und die Funktionsweise des gemäss Figur 3 dargestellten Kraftfahrzeuges 1" entspricht im Wesentlichen dem Aufbau und der Funktionsweise des anhand von Figur 1 beschriebenen Kraftfahrzeuges 1. Das Kraftfahrzeug 1" nach Figur 3 unterscheidet sich vom Kraftfahrzeug 1 nach Figur 1 durch die Mittel zum Auffangen und Aufbringen des am Verdampfer 35 abgeschiedenen Wassers 39 auf wenigstens einen Teilbereich des Wasserkastens 8". Beim erfindungsgemässen Kraftfahrzeug 1" gemäss Figur 3 wird ebenfalls, wie bereits im Zusammenhang mit Figur 1 beschrieben, aus der durch die Klimaanlage 22 gemäss Pfeil 38 hindurchströmenden Luft am Verdampfer 35 das Wasser 39 abgeschieden. Das abgeschiedene Wasser 39 wird wiederum im Reservoir 40 gesammelt. Das Reservoir 40 ist mit einer Einlassöffnung 58 einer Zuführleitung 54 verbunden, welche zwei Auslassöffnungen 57 und 59 aufweist. Die Einlassöffnung 58 und die beiden Auslassöffnungen 57 und 59 sind über einen Hohlraum 55 der Zuführleitung 54 miteinander verbunden. Im Hohlraum 55 sind mit gestrichelten Linien angedeutete Fasern 56, bevorzugt in der Form eines Vlieses, angeordnet. Wie in Figur 3 ersichtlich, ragen die Fasern 56 einerseits aus der Einlassöffnung 58 in das im Reservoir 40 enthaltenen, am Verdampfer 35 abgeschiedenen Wasser 39, und andererseits aus den Auslassöffnungen 57 und 59, wobei diese herausragenden Fasern 56 auf Teilbereiche der Aussenseite 10" des Wasserkastens 8" beziehungsweise der Oberfläche der Bodenwandung 45" sowie der Oberfläche der Deckenwandung 47" des Wasserkastens 8" aufliegen. Die Fasern 56 sind geeignet über den Kapillareffekt das am Verdampfer 35 abgeschiedene und im Reservoir 40 enthaltene Wasser 39 aufzusaugen und zur Deckenwandung 47" sowie der Bodenwandung 45" hinzutransportieren und auf die Oberfläche der Bodenwandung 45" und die Oberfläche der Deckenwandung 47", welche Oberflächen, wie schon erwähnt, Teilbereiche der Aussenseite 10" des Wasserkastens 8" sind, abzugeben. Das auf die Oberfläche der Bodenwandung 45" und die Oberfläche der Deckenwandung 47" abgegebene Wasser 39 kann sich durch Verdunstung oder Verdampfung wieder verflüchtigen, da die Temperatur der Aussenseite 10" des Wasserkastens 8" beziehungsweise der Oberfläche der Bodenwandung 45" und der Oberfläche der Deckenwandung 47", und somit in etwa auch die Temperatur der Wandung 9" welche die Aussenseite 10" des Wasserkastens 8" bildet, normalerweise im Bereich von etwa 40°C bis etwa 120°C liegt. Durch die Verflüchtigung des Wassers 39 wird, wie schon im Zusammenhang mit Figur 1 beschrieben, die durch den Wasserkastens 8" hindurchströmende Luft gekühlt. Die gekühlte Luft strömt, wie schon erwähnt, in die Klimaanlage 22 und danach in den Fahrgastraum 6. Durch die Verflüchtigung des Wassers 39 auf der Aussenseite 10" des Wasserkastens 8" beziehungsweise der Oberfläche der Deckenwandung 47" sowie der Oberfläche der Bodenwandung 45", entsteht zudem eine Saugwirkung, so dass die Fasern 56 wieder neues Wasser 39 aus dem Reservoir 40 ansaugen und dieses wiederum zur Deckenwandung 47" sowie der Bodenwandung 45" hintransportieren und auf die Aussenseite 10" des Wasserkastens 8" beziehungsweise auf die Oberfläche der Bodenwandung 45" und auf die Oberfläche der Deckenwandung 47" abgeben. Aufgrund dieser Saugwirkung entsteht eine kontinuierlicher Auftrag des Wassers 39 auf die Oberfläche der Bodenwandung 45" und die Oberfläche der Deckenwandung 47" und somit einen kontinuierliche Kühlung der durch den Wasserkasten 8" hindurchströmenden Luft. Die Fasern 56 können aus demselben Material oder unterschiedlichen Materialien bestehen. Denkbar ist beispielsweise, dass die in der Zuführleitung 54 angeordneten Fasern 56 aus einem Material bestehen und die aus der Zuführleitung 54 herausragenden Fasern ein anderes Material aufweisen. Die aus der Zuführleitung 54 herausragenden Fasern sind dann beispielsweise mit den in der Zuführleitung 54 angeordneten Fasern einstückig verbunden oder schliessen an diese an, so dass ein Flüssigkeitsübergang zwischen den Fasern möglich ist.

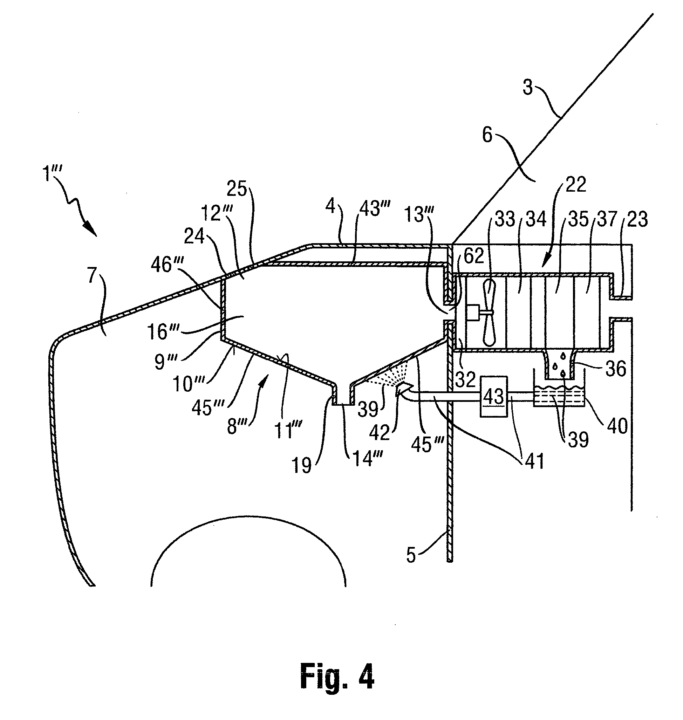

Die Figur 4 zeigt schematisch eine dritte Variante des Schnittes durch den Vorderteil des erfindungsgemässen Kraftfahrzeuges gemäss Figur 1. Der Aufbau und die Funktionsweise des gemäss Figur 4 dargestellten Kraftfahrzeuges 1"' entspricht im Wesentlichen dem Aufbau und der Funktionsweise des anhand von Figur 1 beschriebenen Kraftfahrzeuges 1. Das Kraftfahrzeug 1"' nach Figur 3 unterscheidet sich vom Kraftfahrzeug 1 nach Figur 1 durch den Aufbau des Wasserkastens sowie den Mitteln zum Auffangen und Aufbringen des am Verdampfer abgeschiedenen Wassers. Das Kraftfahrzeug 1"' nach Figur 4 weist einen Wasserkasten 8"' auf. Der Wasserkasten 8"' weist eine Lufteinlassöffnung 12"', eine Luftauslassöffnung 13"', eine Wasserauslassöffnung 14"' sowie eine Wandung 9"' auf, welche eine Aussenseite 10"' sowie eine Innenseite 11"' des Wasserkastens 8"' bildet, wobei die Innenseite 11"' ausschliesslich einen Wasserabscheideraum 16"' bildet. Der Wasserkasten 1"' weist daher, im Gegensatz zum Wasserkasten 1 gemäss Figur 1, keine Luftzuführleitung und keine Luftauslassleitung auf. Beim Wasserkasten 8"' ist daher der Wasserabscheideraum 16"' unmittelbar mit der Lufteinlassöffnung 12"', der Luftauslassöffnung 13"' sowie der Wasserauslassöffnung 14"' verbunden. Aufgrund des Fehlens einer Luftzuführleitung und einer Luftauslassleitung ist der Wasserkasten 8"' im Motorraum 7 des Kraftfahrzeuges 1"' so angeordnet, dass die Lufteinlassöffnung 12"' unmittelbar mit der mit dem Gitter 25 abgedeckten Öffnung 24 der Motorhaube 4 verbunden ist. Die Luftauslassöffnung 13"' ist unmittelbar mit einem Durchbruch 62 in der Stirnwand 5 verbunden, welcher mit der Klimaanlage 22 verbunden ist. Das Kraftfahrzeug 1"' unterscheidet sich zudem vom Kraftfahrzeug 1 bezüglich den Mitteln zum Auffangen und Aufbringen des am Verdampfer abgeschiedenen Wassers. Diese Mittel 40, 41, 42, 43 sind beim Kraftfahrzeug 1"' einfacher ausgestaltet als beim Kraftfahrzeug 1 und sind geeignet, das am Verdampfer 35 abgeschiedene Wasser 39 auf die Oberfläche der Bodenwandung 45"' des Wasserkastens 8"', welche Oberfläche ein Teilbereich der Aussenseite 10"' des Wasserkastens ist, aufzutragen.

Ausser dem am Verdampfer 35 abgeschiedenen Wasser 39 kann auf die Aussenseite 10, 10', 10" bzw. 10"' des Wasserkastens auch Wasser aufgebracht werden, das insbesondere im Wasserabscheideraum 16 abgeschieden wird. Dieses Wasser kann beispielsweise durch hier nicht gezeigte Öffnungen, beispielsweise Bohrungen, Poren oder die Wasserablauföffnung, auf die Aussenseite 10, 10', 10" bzw. 10"' geleitet werden. Beim Verdampfen dieses Wassers wird die entsprechende Wandung des Wasserkastens gekühlt.

### Bezugszeichenliste

| | | | |
|---|---|---|---|
| 1 | Kraftfahrzeug | 30 | Vorrichtung |
| 2 | Karosserie | 31 | Pfeil |
| 3 | Windschutzscheibe | 32 | Vorfilter |
| 4 | Motorhaube | 33 | Luftzuführmittel |
| 5 | Stirnwand | 34 | Luftfilter |
| 6 | Fahrgastraum | 35 | Verdampfer |
| 7 | Motorraum | 36 | Wasserabscheider |
| 8 | Wasserkasten | 37 | Heizvorrichtung |
| 9 | Wandung | 38 | Pfeil |
| 10 | Aussenseite | 39 | Wasser |
| 11 | Innenseite | 40 | Reservoir |
| 12 | Lufteinlassöffnung | 41 | Zuführleitung |
| 13 | Luftauslassöffnung | 42 | Sprühdüse |
| 14 | Wasserauslassöffnung | 43 | Fluidpumpe |
| 15 | Teilbereich | 44 | Fasern |
| 16 | Wasserabscheideraum | 45 | Bodenwandung |
| 17 | Teilbereich | 46 | Seitenwandung |
| 18 | Teilbereich | 47 | Deckenwandung |
| 19 | Ventil | 48 | Wandungsabschnitt |
| 20 | Luftzuführleitung | 49 | innerer Wandungsteil |
| 21 | Luftauslassleitung | 50 | äusserer Wandungsteil |
| 22 | Klimaanlage | 51 | äussere Oberfläche |
| 23 | Luftzuführleitung | 52 | innere Oberfläche |
| 24 | Öffnung | 53 | äussere Oberfläche |
| 25 | Gitter | 54 | Zuführleitung |
| 26 | Unterkante | 55 | Hohlraum |
| 27 | Pfeil | 56 | Fasern |
| 28 | Pfeil | 57 | Auslassöffnung |
| 29 | Pfeil | 58 | Einlassöffnung |
| 59 | Auslassöffnung | 61 | Wandungsabschnitt |
| 60 | Wandungsabschnitt | 62 | Durchbruch |

## Patentansprüche

1. Kraftfahrzeug umfassend einen Fahrgastraum (6), eine Klimaanlage (22) welche mit dem Fahrgastraum (6) verbunden ist zum Zuführen von Luft aus der Klimaanlage (22) in den Fahrgastraum (6), wobei die Klimaanlage (22) einen Verdampfer (35) aufweist, welcher geeignet ist aus der der Klimaanlage (22) zuführbaren Luft Wasser (39) abzuscheiden, Luftzuführmittel (33) zum Ansaugen von Luft in die Klimaanlage (22) sowie Mittel (40,41,42,43,54,56) zum Auffangen und Aufbringen des am Verdampfer (35) abgeschiedenen Wassers (39) auf wenigstens einen Teilbereich einer Aussenseite (10,10',10",10"') wenigstens eines Bestandteils des Kraftfahrzeuges (1,1',1",1"') zum Kühlen der dem Fahrgastraum (6) zuführbaren Luft, wobei der Bestandteil ein Wasserkasten (8, 8', 8" , 8"') ist, **dadurch gekennzeichnet dass** der eine Wandung (9,9',9",9"') umfasst welche die Aussenseite (10,10',10",10"') und eine Innenseite (11,11',11",11"') des Wasserkastens (8,8',8",8"') bildet, sowie wenigstens eine Lufteinlassöffnung (12,12"'), wenigstens eine Luftauslassöffnung (13,13"') und wenigstens eine Wasserauslassöffnung (14,14"') aufweist, wobei die Innenseite (11,11',11",11"') einen Wasserabscheideraum (16,16"') bildet, welcher mit der Lufteinlassöffnung (12,12"'), der Luftauslassöffnung (13,13"') sowie der Wasserauslassöffnung (14,14"') verbunden ist, wobei die Wasserauslassöffnung (14,14"') geeignet ist zum Abführen von Wasser aus dem Wasserabscheideraum (16, 16"'), wobei die Klimaanlage (22) mit der Luftauslassöffnung (13,13"') verbunden ist zum Zuführen von Luft aus dem Wasserkasten (8,8',8",8"') in die Klimaanlage (22) und wobei die Luftzuführmittel (33) geeignet sind über die Lufteinlassöffnung (12,12"') Luft in die Klimaanlage (22) anzusaugen.

2. Kraftfahrzeug nach Anspruch 1, **dadurch gekennzeichnet, dass** die Mittel(40,41,42,43,54,56) wenigstens eine Zuführleitung (41,54) umfassen.

3. Kraftfahrzeug nach Anspruch 2, **dadurch gekennzeichnet, dass** die Zuführleitung (54) wenigstens eine Einlassöffnung (58) und wenigstens einen Auslassöffnung (57,59) aufweist, wobei die Einlassöffnung (58) und die Auslassöffnung (57,59) über einen Hohlraum (55) miteinander verbunden sind, wobei wenigstens im Hohlraum (55) Fasern (56) angeordnet sind, welche geeignet sind über den Kapillareffekt das am Verdampfer (35) abgeschiedene Wasser (39) wenigstens von der Einlassöffnung (58) zur Auslassöffnung (57,59) hinzutransportieren sowie das genannte Wasser (39) wieder abzugeben.

4. Kraftfahrzeug nach einem der vorangehenden Ansprüche, **dadurch gekennzeichnet, dass** die Mittel (40,41,42,43,54,56) wenigstens eine Sprühdüse (42) umfassen.

5. Kraftfahrzeug nach einem der vorangehenden Ansprüche, **dadurch gekennzeichnet, dass** die Mittel (40,41,42,43,54,56) wenigstens eine Fluidpumpe (43) umfassen.

6. Kraftfahrzeug nach einem der vorangehenden Ansprüche, **dadurch gekennzeichnet, dass** die Mittel (40,41,42,43,54,56) wenigstens ein Reservoir (40) zum Sammeln des am Verdampfer (35) abgeschiedenen Wassers (39) umfassen.

7. Kraftfahrzeug nach einem der vorangehenden Ansprüche, **dadurch gekennzeichnet, dass** die Luftzuführmittel (33) wenigstens ein Sauggebläse umfassen.

8. Kraftfahrzeug nach einem der vorangehenden Ansprüche, **dadurch gekennzeichnet, dass** die Wandung (9'), welche die Aussenseite (10') des Wasserkastens (8') bildet, Fasern (44) aufweist, so dass wenigstens ein Teilbereich der Aussenseite (10') des Wasserkastens (8') durch Fasern (44) gebildet ist, welche geeignet sind, gemäss dem Kapillareffekt, das am Verdampfer (35) abgeschiedene Wasser (39) aufzunehmen, das aufgenommene Wasser (39) zu speichern sowie das gespeicherte Wasser (39) wieder abzugeben.

9. Kraftfahrzeug nach Anspruch 8, **dadurch gekennzeichnet, dass** die Fasern (44) temperaturisolierende Eigenschaften aufweisen.

10. Kraftfahrzeug nach Anspruch 3 oder 8 oder 9, **dadurch gekennzeichnet, dass** die Fasern (44, 56) ein Vlies, bevorzugt einen Filz, bilden.

11. Kraftfahrzeug nach einem der vorangehenden Ansprüche, **dadurch gekennzeichnet, dass** im Wasserabscheideraum (16) wenigstens eine Vorrichtung (30) zum Abscheiden von Wasser aus der den Wasserkasten (8,8',8") hindurchströmenden Luft angeordnet ist.

12. Kraftfahrzeug nach einem der vorangehenden Ansprüche, **dadurch gekennzeichnet, dass** die Wandung (9,9',9") wenigstens eine Luftauslassleitung (21) bildet welche die Luftauslassöffnung (13) mit dem Wasserabscheideraum (16) verbindet.

13. Kraftfahrzeug nach einem der vorangehenden Ansprüche, **dadurch gekennzeichnet, dass** die Wandung (9,9',9") wenigstens eine Luftzuführleitung (20) bildet, welche die Lufteinlassöffnung (12) mit dem Wasserabscheideraum (16) verbindet.

14. Kraftfahrzeug nach einem der Ansprüche 1-11, **dadurch gekennzeichnet, dass** der Wasserabscheideraum (16"') unmittelbar mit der Lufteinlassöffnung (12"'), der Luftauslassöffnung (13"') sowie der Wasserauslassöffnung (14"') verbunden ist.

15. Kraftfahrzeug nach einem der Ansprüche 1 bis 14, **dadurch gekennzeichnet, dass** der Verdampfer (35) im Fahrgastraum (6) und der Wasserkasten (8, 8', 8", 8"') im Motorraum (7) angeordnet ist.

## Claims

1. Motor vehicle, comprising a passenger room (6), an air-conditioning system (22), which is connected to the passenger room (6), for supplying air from the air-conditioning system (22) into the passenger room (6), wherein the air-conditioning system (22) has an evaporator (35) which is suitable for separating water (39) from the air which can be supplied to the air-conditioning system (22), air-supply means (33) for sucking up air into the air-conditioning system (22), and also means (40, 41, 42, 43, 54, 56) for catching and applying the water (39) separated at the evaporator (35) over at least a partial region of an outer side (10, 10', 10", 10"') of at least one component of the motor vehicle (1, 1', 1" , 1"') for cooling the air which can be supplied to the passenger room (6), wherein the component is a water box (8, 8', 8" , 8"'), **characterized in that** said component comprises a wall (9, 9', 9" , 9"') which forms the outer side (10, 10', 10", 10"') and an inner side (11, 11', 11", 11"') of the water box (8, 8', 8", 8"'), and has at least one air inlet opening (12, 12"'), at least one air outlet opening (13, 13"') and at least one water outlet opening (14, 14"'), wherein the inner side (11, 11', 11" , 11"') forms a water-separating space (16, 16"') which is connected to the air inlet opening (12, 12"'), to the air outlet opening (13, 13"') and to the water outlet opening (14, 14"'), wherein the water outlet opening (14, 14"') is suitable for removing water from the water-separating space (16, 16"'), wherein the air-conditioning system (22) is connected to the air outlet opening (13, 13"') in order to supply air from the water box (8, 8', 8" , 8"') into the air-conditioning system (22), and wherein the air supply means (33) are suitable for sucking up air into the air-conditioning system (22) via the air inlet opening (12, 12"').

2. Motor vehicle according to Claim 1, **characterized in that** the means (40, 41, 42, 43, 54, 56) comprise at least one supply line (41, 54).

3. Motor vehicle according to Claim 2, **characterized in that** the supply line (54) has at least one inlet opening (58) and at least one outlet opening (57, 59), wherein the inlet opening (58) and the outlet opening (57, 59) are connected to each other via a cavity (55), wherein fibres (56) are arranged at least in the cavity (55), said fibres being suitable via the capillary effect, for transporting the water (39) separated at the evaporator (35) at least from the inlet opening (58) to the outlet opening (57, 59) and for again dispensing the water (39) mentioned.

4. Motor vehicle according to one of the preceding claims, **characterized in that** the means (40, 41, 42, 43, 54, 56) comprise at least one spray nozzle (42).

5. Motor vehicle according to one of the preceding claims, **characterized in that** the means (40, 41, 42, 43, 54, 56) comprise at least one fluid pump (43).

6. Motor vehicle according to one of the preceding claims, **characterized in that** the means (40, 41, 42, 43, 54, 56) comprise at least one reservoir (40) for collecting the water (39) separated at the evaporator (35) .

7. Motor vehicle according to one of the preceding claims, **characterized in that** the air supply means (33) comprise at least one suction blower.

8. Motor vehicle according to one of the preceding claims, **characterized in that** the wall (9') which forms the outer side (10') of the water box (8') has fibres (44) such that at least a partial region of the outer side (10') of the water box (8') is formed by fibres (44) which are suitable, in accordance with the capillary effect, for absorbing the water (39) separated at the evaporator (35), for storing the absorbed water (39) and for again dispensing the stored water (39).

9. Motor vehicle according to Claim 8, **characterized in that** the fibres (44) have temperature-insulating properties.

10. Motor vehicle according to Claim 3 or 8 or 9, **characterized in that** the fibres (44, 56) form a fleece, preferably a felt.

11. Motor vehicle according to one of the preceding claims, **characterized in that** at least one device (30) for separating water from the air flowing through the water box (8, 8', 8") is arranged in the water-separating space (16).

12. Motor vehicle according to one of the preceding claims, **characterized in that** the wall (9, 9', 9") forms at least one air outlet line (21) which connects the air outlet opening (13) to the water-separating space (16).

13. Motor vehicle according to one of the preceding claims, **characterized in that** the wall (9, 9', 9") forms at least one air supply line (20) which connects the air inlet opening (12) to the water-separating space (16).

14. Motor vehicle according to one of Claims 1 - 11, **characterized in that** the water-separating space (16"') is directly connected to the air inlet opening (12"'), to the air outlet opening (13"') and to the water outlet opening (14"').

15. Motor vehicle according to one of Claims 1 to 14, **characterized in that** the evaporator (35) is arranged in the passenger room (6) and the water box (8, 8', 8", 8"') is arranged in the engine compartment (7).

## Revendications

1. Véhicule automobile comprenant un espace pour passagers (6), un climatiseur (22) qui est relié avec l'espace pour passagers (6) en vue d'acheminer de l'air depuis le climatiseur (22) dans l'espace pour passagers (6), le climatiseur (22) présentant un évaporateur (35) qui est conçu pour extraire l'eau (39) hors de l'air qui peut être acheminé au climatiseur (22), des moyens d'acheminement d'air (33) pour aspirer l'air dans le climatiseur (22) ainsi que des moyens (40, 41, 42, 43, 54, 56) pour recueillir et appliquer l'eau (39) extraite au niveau de l'évaporateur (35) sur au moins une zone partielle d'un côté extérieur (10, 10', 10", 10"') d'au moins un composant du véhicule automobile (1, 1' , 1", 1"') en vue de rafraîchir l'air qui peut être acheminé à l'espace pour passagers (6), le composant étant une boîte d'eau (8, 8', 8", 8"'), **caractérisé en ce que** celui-ci comprend une paroi (9, 9', 9", 9"') qui forme le côté extérieur (10, 10', 10" , 10"') et un côté intérieur (11, 11', 11", 11"') de la boîte d'eau (8, 8', 8", 8"'), et présente au moins une ouverture d'entrée d'air (12, 12"'), au moins une ouverture de sortie d'air (13, 13"') et au moins une ouverture de sortie d'eau (14, 14"'), le côté intérieur (11, 11', 11", 11"') formant un espace d'extraction d'eau (16, 16"') qui est relié avec l'ouverture d'entrée d'air (12, 12"'), l'ouverture de sortie d'air (13, 13"') et l'ouverture de sortie d'eau (14, 14"'), l'ouverture de sortie d'eau (14, 14"') étant adaptée pour évacuer l'eau hors de l'espace d'extraction d'eau (16, 16"'), le climatiseur (22) étant relié avec l'ouverture de sortie d'air (13, 13"') pour l'acheminement de l'air hors de la boîte d'eau (8, 8', 8" , 8"') dans le climatiseur (22) et les moyens d'acheminement d'air (33) étant adaptés pour aspirer de l'air dans le climatiseur (22) par le biais de l'ouverture d'entrée d'air (12, 12"').

2. Véhicule automobile selon la revendication 1, **caractérisé en ce que** les moyens (40, 41, 42, 43, 54, 56) comprennent au moins une conduite d'arrivée (41, 54).

3. Véhicule automobile selon la revendication 2, **caractérisé en ce que** la conduite d'arrivée (54) présente au moins une ouverture d'entrée (58) et au moins une ouverture de sortie (57, 59), l'ouverture d'entrée (58) et l'ouverture de sortie (57, 59) étant reliées entre elles par un espace vide (55), des fibres (56) étant disposées au moins dans l'espace vide (55), lesquelles sont adaptées pour, par effet capillaire, transporter l'eau (39) extraite au niveau de l'évaporateur (35) au moins de l'ouverture d'entrée (58) en direction de l'ouverture de sortie (57, 59) et aussi pour délivrer de nouveau ladite eau (39).

4. Véhicule automobile selon l'une des revendications précédentes, **caractérisé en ce que** les moyens (40, 41, 42, 43, 54, 56) comprennent au moins une buse de pulvérisation (42).

5. Véhicule automobile selon l'une des revendications précédentes, **caractérisé en ce que** les moyens (40, 41, 42, 43, 54, 56) comprennent au moins une pompe à fluide (43).

6. Véhicule automobile selon l'une des revendications précédentes, **caractérisé en ce que** les moyens (40, 41, 42, 43, 54, 56) comprennent au moins un réservoir (40) pour collecter l'eau (39) extraite au niveau de l'évaporateur (35).

7. Véhicule automobile selon l'une des revendications précédentes, **caractérisé en ce que** les moyens d'acheminement d'air (33) comprennent au moins une soufflerie d'aspiration.

8. Véhicule automobile selon l'une des revendications précédentes, **caractérisé en ce que** la paroi (9') qui forme le côté extérieur (10') de la boîte d'eau (8') présente des fibres (44), de sorte qu'au moins une zone partielle du côté extérieur (10') de la boîte d'eau (8') est formée par des fibres (44), lesquelles sont adaptées pour, conformément à l'effet capillaire, absorber l'eau (39) extraite au niveau de l'évaporateur (35), accumuler l'eau (39) absorbée et délivrer de nouveau l'eau (39) accumulée.

9. Véhicule automobile selon la revendication 8, **caractérisé en ce que** les fibres (44) présentent des propriétés d'isolation thermique.

10. Véhicule automobile selon la revendication 3 ou 8 ou 9, **caractérisé en ce que** les fibres (44, 56) forment un voile, de préférence un feutre.

11. Véhicule automobile selon l'une des revendications précédentes, **caractérisé en ce que** dans l'espace d'extraction d'eau (16) est disposé au moins un dispositif (30) pour extraire l'eau hors de l'air qui circule à travers la boîte d'eau (8, 8', 8").

12. Véhicule automobile selon l'une des revendications précédentes, **caractérisé en ce que** la paroi (9, 9', 9") forme au moins une conduite de sortie d'air (21) qui relie l'ouverture de sortie d'air (13) avec l'espace d'extraction d'eau (16).

13. Véhicule automobile selon l'une des revendications précédentes, **caractérisé en ce que** la paroi (9, 9', 9") forme au moins une conduite d'acheminement d'air (20) qui relie l'ouverture d'entrée d'air (12) avec l'espace d'extraction d'eau (16).

14. Véhicule automobile selon l'une des revendications 1 à 11, **caractérisé en ce que** l'espace d'extraction d'eau (16"') est relié directement avec l'ouverture d'entrée d'air (12"'), l'ouverture de sortie d'air (13"') ainsi que l'ouverture de sortie d'eau (14"').

15. Véhicule automobile selon l'une des revendications 1 à 14, **caractérisé en ce que** l'évaporateur (35) est disposé dans l'espace pour passagers (6) et la boîte d'eau (8, 8', 8" , 8"') dans le compartiment du moteur (7).
